# EUROPÄISCHE PATENTSCHRIFT

(11) **EP 0 660 923 B1**
(45) Veröffentlichungstag und Bekanntmachung des Hinweises auf die Patenterteilung: **22.01.1997**
(21) Anmeldenummer: 93912582.9
(22) Anmeldetag: 11.06.1993
(51) Int. Cl.: G01N 21/17

(54) **PHOTOTERMISCHER SENSOR**
PHOTO-THERMAL SENSOR
DETECTEUR PHOTOTHERMIQUE

(30) Priorität: 18.09.1992 DE 4231214
(43) Veröffentlichungstag der Anmeldung: 05.07.1995
(73) Patentinhaber: Forschungszentrum Karlsruhe GmbH, 76133 Karlsruhe (DE)
(72) Erfinder: SCHULZ, Torsten, D-7500 Karlsruhe 1 (DE); FAUBEL, Werner, D-7514 Eggenstein-Leopoldshafen (DE)
(74) Vertreter: Rückert, Friedrich, Dr.
(86) Internationale Anmeldenummer: DE9300507
(87) Internationale Veröffentlichungsnummer: WO9407125

(56) Entgegenhaltungen:
- EP-A- 0 427 943
- APPLIED OPTICS. Bd. 29, Nr. 1, 1. Januar 1990, NEW YORK US Seiten 52 - 62 J.F. POWER 'Pulsed mode thermal lens effect detection in the near field via thermally induced probe beam spatial phase modulation: a theory'
- ANALYTICAL CHEMISTRY Bd. 63, Nr. 18, 15. September 1991, COLUMBUS US Seiten 1927 - 1932 D.ROJAS ET AL. 'Dual-Beam Optical Fiber Thermal Lens Spectroscopy'
- ANALYTICAL CHEMISTRY Bd. 60, Nr. 9, 1. Mai 1988, COLUMBUS US Seiten 838 - 842 J.F.POWER ET AL. 'Mode Mismatched Laser Induced Thermal Lens Effect Detection via Spatial Fourier Analysis of Beam Profiles'
- ANALYTICAL CHEMISTRY Bd. 64, Nr. 17, 1. September 1992, COLUMBUS US Seiten 1824 - 1830 S.D.KALASKAR ET AL. 'Comparison of BaTiO3 Optical Novelty Filter and Photothermal Lensing configurations in Photothermal Experiments'

## Beschreibung

Die Erfindung betrifft einen photothermischen Sensor gemäß dem Oberbegriff des ersten Patentanspruchs.

Bei photothermischen Sensoren wird Licht in eine zu untersuchende Probe eingestrahlt. Enthält die Probe einen Stoff, der das Licht absorbiert, wird Lichtenergie in Wärmeenergie umgewandelt, wodurch sich die Temperatur der Probe erhöht. Da sich der Brechungsindex im allgemeinen mit der Temperatur ändert, bildet sich hierbei ein optisches Medium analog einer Gradientenindexlinse aus, das definitionsgemäß als "Thermische Linse (abgekürzt: T. L.)" bezeichnet wird. Die Thermische Linse kann nachgewiesen werden, indem in die Probe ein zweiter Lichtstrahl eingestrahlt und dessen Brechung registriert wird. Die Probe muß ausreichend transparent sein, so daß der zweite Lichtstrahl nach Durchgang durch die Probe nachgewiesen werden kann.

Ein photothermischer Sensor der eingangs genannten Art ist aus der Veröffentlichung von Dorys Rojas, Robert J. Silva, Jonathan D. Spear und Richard E. Russo "Dual-Beam Opical Fiber Thermal Lens Spektroscopy" in Anal. Chem. **1991**, 63, 1927-1932 bekannt. Mit diesem Sensor wird die Konzentration von Proben, die aus einer wäßrigen Lösung von Nd³⁺-Ionen in einer Küvette bestehen, bestimmt.

Als Anregungslichtquelle wird ein Farbstofflaser verwendet, der kohärentes Licht der Wellenlänge 590 nm aussendet und durch einen Dauerstrich-Argonionenlaser gepumpt wird. Der Lichtstrahl des Anregungslasers ist mit 10 Hz moduliert und über einen Lichtleiter und einer chromatischen Optik bestehend aus drei Linsen so geführt, daß sich am Ort der Probe eine Einschnürung des Strahls ergibt. Als Detektionslaser wird ein Helium-Neon-Laser verwendet, dessen kohärenter Lichtstrahl senkrecht zum Lichtstrahl des Anregungslasers emittiert und mit einer weiteren Linse so geführt wird, daß sich im Strahlengang nach der Probe eine zweite Einschnürung des Strahls einstellt. Das Licht der Anregungslichtquelle wird an einem Strahlteiler in Richtung auf die Probe umgelenkt. Ein Anteil von 50 % des Lichts, das den Strahlteiler durchdringt, wird in einen ersten Detektor geleitet. Das Licht des Detektionslasers durchdringt den Strahlteiler und trifft ebenfalls auf die Probe. Im Strahlengang des die Probe durchdringenden Lichts ist zuerst ein Interferenzfilter und danach ein zweiter Lichtleiter angeordnet, an dem der überwiegende Teil des Lichts ausgeblendet wird. Hieran schließt sich ein zweiter Detektor und eine Auswerteeinheit an.

Wie aus dieser Veröffentlichung hervorgeht, muß der Abstand zwischen der Probe und der Eintrittsfläche des zweiten Lichtleiters mindestens 10 bis 15 cm betragen, damit eine ausreichende Lichtintensitätsmodulation auf den zweiten Detektor gelangt. Der bekannte photothermische Sensor kann daher nicht kompakt aufgebaut werden.

Ein weiterer Sensor zur photothermischen Spektroskopie ist aus der DE 39 37 905 C1 bekannt. Bei diesem Sensor werden Probenlichtstrahl und modulierter Anregungslichtstrahl in eine Lichtleitfaser eingekoppelt. Am Ende der Lichtleitfaser treten Probenlichtstrahl und Anregungslichtstrahl aus und werden in einer unverzichtbaren chromatischen Optik fokussiert. Dabei wird eine solche chromatische Optik verwendet, daß die beiden Lichtstahlen zwei räumlich voneinander getrennte Brennpunkte aufweisen. Im Bereich der Brennpunkte befindet sich das zu analysierende Medium. Die Intensität des Probenlichtstrahls wird über eine Lochblende von einem Detektor aufgenommen. Das Detektorsignal wird einer zentralen Auswerteeinheit zugeführt.

Die Verwendung einer wellenlängenabhängigen Optik führt bei diesem Sensor zu Einschränkungen bei der Wahl beliebiger Wellenlängenkombinationen für Anregungslichtquelle und Detektionslaser. Wegen der Abbildungseigenschaften der Lichtleitfaser kann ist dieser Sensor nicht empfindlich.

Ein weiterer photothermischer Sensor ist aus der Veröffentlichung von Shaole Wu und Norman J. Dovichi mit dem Titel "Fresnel diffraction theory for steady-state thermal lens mesurements in thin films", J. Appl. Phys. **67** (3) (1. Febr. 1990) Seiten 1170-1182 bekannt. Bei diesem Sensor sind Anregungslichtquelle und Detektionslaser identisch. Zur Signaloptimierung werden die Fresnel'schen Beugungsgesetze angewandt.

Der Erfindung liegt die Aufgabe zugrunde, einen photothermischen Sensor der eingangs genannten Art anzugeben, der kompakter aufgebaut werden kann. Insbesondere soll der Abstand zwischen der Probe und der Vorrichtung, an der der überwiegende Teil des die Probe durchstrahlenden Lichts ausgeblendet wird, verringert werden, ohne daß die Empfindlichkeit in Bezug auf die Änderung des Brechungsindex sinkt.

Die erfindungsgemäße Lösung der Aufgabe ist im Kennzeichen des ersten Patentanspruchs angegeben. In den abhängigen Ansprüchen werden besonders bevorzugte Ausgestaltungen des erfindungsgemäßen Sensors beschrieben.

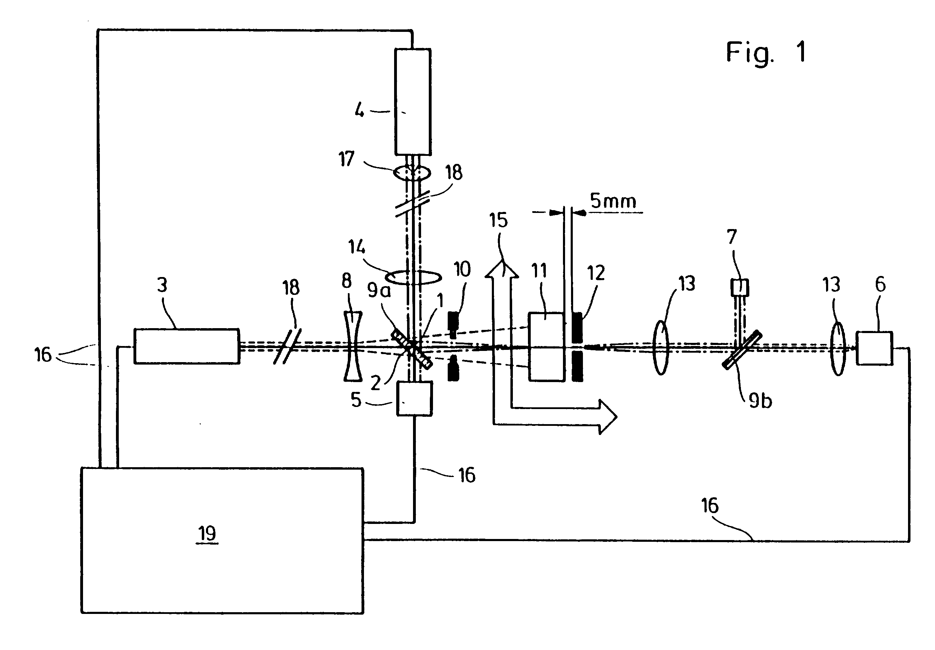

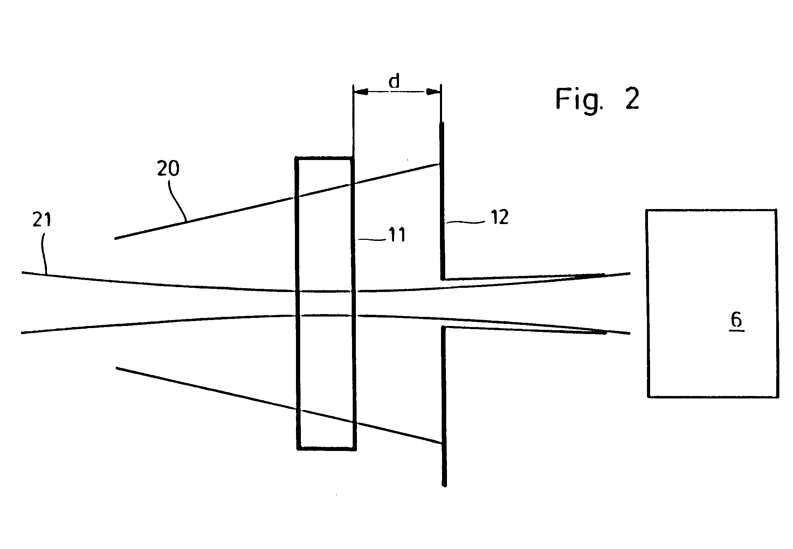

Zwar wird in der Veröffentlichung von J. F. Power mit dem Titel "Pulsed mode thermal lens effect detection in the near field via thermally induced probe beam spatial phase modulation: a theory", Applied Optics, Vol. 29 No. 1 (1. Jan. 1990) Seiten 52-63 eine Theorie für die Thermische Linse unter Ausnutzung der Fresnel'schen Beugungsgesetze entwickelt, die von folgenden Randbedingungen ausgeht:
(i) Eine fokussierte Anregungslichtquelle wird genutzt, um den photothermischen Effekt über den Brechungsindexgradienten nachzuweisen (vgl. Fig. 1).
(ii) Ein kohärenter Detektionslaserstrahl wird zum Nachweis des Brechungsindexgradienten-Profils eingesetzt.
(ii) Anregungs- und Detektionslichtstrahl werden kollinear geführt.
(iii) Die Radienverhältnisse von Anregungs- und Detektionslichtstrahl sollen in einem Bereich zwischen 1:2 und 1:10 variiert werden (vgl. Fig. 2).
(iv) Zur Signalverbesserung werden die Fresnel'schen Beugungsgesetze ausgenutzt.

Der erfindungsgemäße photothermische Sensor unterscheidet sich jedoch in wesentlichen Punkten vom vorgeschlagenen photothermischen System:
(i) Gemäß dieser Veröffentlichung muß die Anregungslichtquelle gepulst sein. Dies ist erfindungsgemäß nicht notwendig.
(ii) Es wird nicht angegeben, auf welche Weise der von der Anregungslichtquelle emittierte Lichtstrahl nach Durchgang durch die Probe geführt werden muß.
(iii) Gemäß dieser Theorie ist die Dicke 1 der Probe einschränkenden Bedingungen unterworfen (1 << d). Daraus muß die Folgerung gezogen werden, daß die Probe um ein Vielfaches dünner zu wählen ist als der Abstand zwischen Probe und Blende. Solche Einschränkungen bestehen erfindungsgemäß nicht.
(iv) Der vom Detektionslaser emittierte Lichtstrahl muß gemäß dieser Theorie unbedingt vor der Probe fokussiert werden. Erfindungsgemäß muß dieser Lichtstrahl lediglich aufgeweitet werden.
(v) Die entwickelte Theorie bezieht sich auf ein raumauflösendes Detektionsverfahren mit z. B. einem Diodenarray als Detektor. In diesem Fall tritt das Diodenarray an die Stelle der Blende.

Die wesentlichen Merkmale des erfindungsgemäßen photothermischen Sensors bestehen darin, daß - ausgehend von einem im Oberbegriff des ersten Patentanspuchs beschriebenen Sensor - im Strahlengang des Detektionslasers keine Sammellinse oder Lichtleitfaser verwendet wird, die an einem Ort nach der Probe zu einer Einschnürung des Lichtstrahls führt, sondern eine Aufweitungslinse. Durch diese Linse wird der Lichtstrahl des Detektionslasers kegelförmig in der Weise aufgeweitet, daß sein Radius am Ort der Probe mindestens fünf mal, z. B. fünf bis fünfzig mal so groß ist wie der Radius des am Ort der Probe eingeschnürten Lichtstrahls, der aus der Anregungslichtquelle stammt, und unmittelbar nach der Probe eine Blende in der Weise angeordnet ist, daß der aus der Anregungslichtquelle stammende Lichtstrahl diese Blende ungehindert passiert.

Die Größe der Aufweitung des Lichtstrahls, der vom Detektionslaser emittiert wird, hängt von der geometrischen Ausdehnung der Probe und von der geforderten Empfindlichkeit des Sensors bezüglich der Änderung des Brechungsindex ab. Der aufgeweitete Strahl soll die gesamte Probe erfassen. Die untere Grenze für die Aufweitung wird z. B. dann gewählt, wenn bei flüssigen Proben nur sehr kleine Volumina zur Verfügung stehen, somit nur kleine Oberflächen genutzt werden können. Die Wahl einer noch geringeren Aufweitung bedingt in aller Regel eine verminderte Empfindlichkeit. Wenn größere Proben eingesetzt werden können, wird eine größere Aufweitung bevorzugt, weil dann die Empfindlichkeit des Sensors verbessert wird. Bei entsprechend großen Proben kann unter Umständen auch mit einem auf mehr als das fünfzigfache aufgeweiteten Lichtstrahl gearbeitet werden.

Der Lichtstrahl aus der Anregungsquelle soll wie beim eingangs beschriebenen photothermischen Sensor am Ort der Probe oder zumindest in deren Nähe in der Weise eingeschnürt sein, daß die volle Lichtintensität auf die Probe konzentriert wird. Als Anregungslichtquelle kann z. B. ein Laser, eine Laserdiode oder eine Bogenlampe verwendet werden; ihr Licht braucht nicht kohärent zu sein.

Vorzugsweise enthält der erfindungsgemäße photothermische Sensor eine achromatische Optik. Er unterliegt dann keinen Einschränkungen hinsichtlich der Wahl der Wellenlänge von Anregungs- und Detektionslicht und kann als echtes Spektrometer eingesetzt werden, wenn als Anregungslichtquelle z. B. ein durchstimmbarer Laser verwendet wird.

Als Strahlteiler werden bevorzugt Langpasskantenfilter eingesetzt, weil mit solchen Filtern eine höhere Lichtintensität auf die Probe gerichtet werden kann. Durch das Langpasskantenfilter werden sowohl der erste als auch der zweite Lichtstrahl kollinear und zentrosymmetrisch eingekoppelt und in die Probe eingestrahlt. Um das zu erreichen, werden in einer ersten Ausführungsform, bei der der erste Lichtstrahl umgelenkt und der zweite transmittiert wird, solche Langpasskantenfilter verwendet, deren maximales Reflektionsvermögen bei der Wellenlänge des Anregungslichts und deren maximales Transmissionsvermögen bei der Wellenlänge des Detektionslichts liegen. In einer zweiten Ausführungsform, bei der die Lage von Anregungslichtquelle und Detektionslaser vertauscht ist, muB sich auch das Reflektions- und Transmissionsverhalten des Langpasskantenfilters entsprechend umkehren.

Besonders bevorzugt wird ein solcher photothermische Sensor, bei dem in den Strahlengang zwischen dem Strahlteiler und der Probe eine Irisblende angeordnet ist. Der freie Durchmesser der Irisblende soll im geöffneten Zustand so groß sein, daß beide Lichtstrahlen ungehindert transmittiert werden. Im geschlossenen Zustand kann der freie Durchmesser beispielsweise 0,5 mm betragen. Die Irisblende kann in Kombination mit der Blende als Justierhilfe für das Langpasskantenfilter eingesetzt werden. Erst wenn beide Lichtstrahlen die geschlossene Irisblende und die Blende passieren, ist die Bedingung der kollinearen, zentrosymmetrischen Einkopplung gewährleistet. Zur Messung des photothermischen Effekts wird die Irisblende geöffnet.

Als Blende wird vorzugsweise eine Lochblende verwendet. Der freie Durchmesser der Lochblende wird so gewählt, daß der von der Anregungslichtquelle ausgesandte erste Lichtstrahl die Blende ungehindert passiert; der Durchmesser beträgt beispielsweise 1 mm. Vom zweiten, den Detektionslaser verlassenden Lichtstrahl wird nur der Strahlmittelpunkt transmittiert.

Da die Blende im Strahlengang vor dem Filter und unmittelbar nach der Probe angeordnet ist, wird auf der Ebene der Blende ein Fresnel-Beugungsmuster des vom Detektionslaser ausgehenden zweiten Lichtstrahls abgebildet. Diese Möglichkeit für die Anordnung der Blende ist dadurch gegeben, daß der zweite Lichtstrahl des vom Detektionslaser ausgesandten Lichts durch die Linse aufgeweitet wird. Gegenüber der eingangs diskutierten Veröffentlichung von D. Rojas et al. entfällt die Auskopplung des von der Anregungslichtquelle emittierten ersten Strahls. Bei dem dort beschriebenen Sensor wird zwischen Probe und Blende das Filter angeordnet. Würde man diese Anordnung bei einem geringen Abstand (≤ 10 cm) zwischen Probe und Blende wählen, so wären Störeffekte durch Rückreflexion des ersten Lichtstrahls in die Probe und Ausbildung eines weiteren, unerwünschten photothermischen Effekts unvermeidlich. Auch aus diesem Grund muß bei dem aus dieser Veröffentlichung bekannten Sensor zwischen Probe und Blende ein großer Abstand eingehalten werden.

Durch die Anwendung und Ausnutzung der Fresnel-Beugung können ohne Verlust an Empfindlichkeit sehr kleine Detektoren verwendet werden; außerdem läßt der erfindungsgemäße photothermische Sensor eine einfache Bedienung zu.

Im Gegensatz zu dem aus der eingangs diskutierten Veröffentlichung bekannten Sensor kann die Blende in einem Abstand von weniger als 10 cm von der Probe angeordnet werden, ohne daß die Empfindlichkeit bezüglich der Änderung des Brechungsindex sinkt. Hierdurch wird eine besonders vorteilhafte Meßanordnung geschaffen, denn die Abbildungsoptik, die Linse, der Strahlteiler, die Probe, ggf. die Irisblende und die Lochblende können in ein kompaktes Bauteil integriert werden.

Im Strahlengang zwischen Probe und zweitem Detektor wird als Filter vorzugsweise ein weiteres Langpasskantenfilter eingesetzt, mit dem der überwiegende Teil des Anregungs- und Detektionslichts ausgeblendet wird. Diese Lösung, den zweiten Detektor vor dem Licht der Anregungslichtquelle zu schützen, ist der Anwendung eines Absorptions- oder Interferenzfilters überlegen. Das ausgeblendete Licht kann in eine Strahlfalle (beamstop) geleitet werden. Anstelle der Strahlfalle kann auch ein dritter Detektor vorgesehen werden, mit dem direkte Absorptionsmessungen durchgeführt werden können. Bei Verwendung eines Langpasskantenfilters werden zudem Rückreflektionen in die Probe zuverlässig vermieden.

Mit dem erfindungsgemäßen photothermische Sensor können sowohl gasförmige, flüssige als auch feste Proben untersucht werden. Flüssige und gasförmige Proben können sowohl stehende als auch bewegte Proben sein; d. h., der erfindungsgemäße Sensor kann auch als Durchflußmeßgerät eingesetzt werden. Vorzugsweise wird die Frequenz des Modulators der Art der Probe angepaßt. Bei stehenden flüssigen Proben hat sich eine Frequenz von ca. 5 Hz bewährt; bei Durchflußmessungen soll die Modulatorfrequenz im Bereich zwischen 40 und 60 Hz liegen. Noch höhere Modulatorfrequenzen werden für die Untersuchung von festen Proben verwendet; hier kann die Frequenz ca. 3000 Hz betragen.

Mit dem erfindungsgemäßen photothermische Sensor lassen sich bereits Brechungsindexdifferenzen ≤ 10⁻⁸ und damit Extinktionen von 10⁻⁶ bis 10⁻⁵/cm⁻¹ nachweisen. Dies prädestiniert den Sensor zur Anwendung in der Analytik, insbesondere in der Trinkwasseranalytik, weil bereits ppb-Mengen von organischen Schadstoffen nachgewiesen werden können. Durch den erfindungsgemäßen Einsatz einer Aufweitungslinse läßt sich die Nachweisgrenze gegenüber Sensoren der eingangs genannten Art weiter erniedrigen.

Bei der kompakten Bauweise des erfindungsgemäßen Sensors und der damit verbundenen kurzen Strecke die die beiden Strahlen kollinear geführt werden müssen, verhält sich das Detektionssignal relativ unempfindlich bei einer räumlichen Verschiebung der beiden Strahlen zueinander.

Zudem führt die große Aufweitung des Detektionsstrahls zu einer ähnlichen Unempfindlichkeit. Bei einer leichten Verschiebung dieses Strahls befindet sich die signalabgreifende Lochblende immer noch so gut wie in dessen Strahlmittelpunkt. Man muß sich dabei vor Augen halten, daß sich die Detektions-Laser-Strahlenintensität am Ort der Lochblende (also am Detektions-Laser-Intensitätsmaximum) nur sehr wenig ändert. Bei der Justierung der Apperatur ist es somit nicht notwendig, bei beiden Laser-Strahlen exakt kollinear zueinander einzujustieren, das Gerät läßt eine geringe Toleranz zu.

Eine Ausführungsform des erfindungsgemäßen photothermischen Sensors und die hiermit erzielten Ergebnisse werden im folgenden anhand von Figuren und Ausführungsbeispielen näher erläutert.

Es zeigen
**Fig. 1** eine Ausführungsform des erfindungsgemäßen photothermischen Sensors;
**Fig. 2** den ersten (Anregungs-) und den zweiten (Detektions-) Lichtstrahl und das Fresnel-Beugungsmuster in schematischer Darstellung;
**Fig. 3** eine schematische Darstellung der Intensität der Meßsignale in Abhängigkeit von der Zeit;
**Fig. 4** eine mit dem photothermischen Sensor gemäß Fig. 1 aufgenommene Eichgerade für den organischen Schadstoff Trinitroorthokresol (DNOC);
**Fig. 5** Extinktionsmessungen mit DNOC.

In Fig. 1 ist eine Ausführungsform des erfindungsgemäßen photothermischen Sensors dargestellt. Eine Anregungslichtquelle 4 bestehend aus einem Argonionenlaser mit einer Leistung von 150 mW emittiert einen ersten Lichtstrahl mit einer Anregungswellenlänge von 364 nm. Bei dieser Wellenlänge weist eine wäßrige Lösung von DNOC eine Absorptionsbande auf. Der Laserstrahl wird durch einen Modulator 17 mit 5,2 Hz zerhackt und auf eine achromatische Abbildungsoptik 14 zur Erzeugung eines Brennflecks in der Probe 11 gelenkt. Die achromatische Optik hat eine Brennweite von fachromatisch = 200 mm und erzeugt in der Probe eine Einschnürung des Lichtstrahls (einen Fokussierungspunkt) mit einem Durchmesser von 250 µm.

Als Detektionslaser 3 wird ein He-Ne-Laser mit einer Wellenlänge von 633 nm eingesetzt. Bei dieser Wellenlänge weist eine wäßrige Lösung von DNOC ein Absorptionsminimum auf. Der zweite Lichtstrahl wird senkrecht zum ersten Lichtstrahl emittiert und durch eine Optik 8 mit einer Brennweite f_{633 nm} = -20 mm aufgeweitet. Die Aufweitungsoptik 8 befindet sich im Strahlengang 125 mm vor der Probe 11, wodurch ein Strahldurchmesser von 5 mm am Ort der Probe 11 erhalten wird. Als Probe werden wäßrige Lösungen von DNOC wahlweise in 20 mm und 10 mm langen (Durchfluß-) Küvetten eingesetzt.

Beide Laserstrahlen werden durch das Langpasskantenfilter 9a zentrosymmetrisch und kollinear eingekoppelt und in die Probe eingestrahlt. Der vom Anregungslaser 4 ausgehende Lichtstrahl wird dabei an der ersten, oberen Seite 1 des Langpasskantenfilters 9a reflektiert. Der vom Detektionslaser 3 ausgehende Lichtstrahl trifft das Langpasskantenfilter 9a auf der zweiten, unteren Seite 2 und wird transmittiert. Das verwendete Langpasskantenfilter 9a weist sein maximales Reflektionsvermögen von 99,5 % bei der Wellenlänge des Anregungslasers 4 und sein maximales Transmissionsvermögen von 99,5 % bei der Wellenlänge des Detektionslasers 3 bei senkrechter Polarisationsrichtung (s-Pol) auf.

Vor der Probe 11 ist eine Irisblende 10 mit einer freien Öffnung von 0,5 mm im geschlossenen Zustand angeordnet. Die Irisblende 10 dient zusammen mit der Lochblende 12 als Justierhilfe für das Langpasskantenfilter und die Probe.

Durch eine Verschiebeeinheit 15 kann die Probe 11 senkrecht zu beiden Laserstrahlen verschoben und in den Strahlengang positioniert werden. Weiterhin kann die Probe 11 jeweils senkrecht zu beiden Lichtstrahlen gekippt werden, so daß ein etwa auftretender Strahlenversatz (verursacht durch die unterschiedliche Brechung der beiden Strahlen an der Grenzfläche Luft/Probe wegen der Wellenlängendispersion des Lichts) ausgeglichen werden kann und die Kollinearität erhalten bleibt.

Unmittelbar hinter der Probe 11 befindet sich in einem Abstand von 5 mm die Lochblende 12. Der freie Durchmesser der Lochblende 12 ist mit 1 mm so gewählt, daß der vom Anregungslaser 4 ausgehende Lichtstrahl ungehindert passiert, während von dem vom Detektionslaser 3 ausgehende Lichtstrahl nur der Strahlenmittelpunkt transmittiert wird. Hierdurch ist sichergestellt, daß am Detektor 6 die höchsten Intensitätsschwankungen, die die Thermische Linse auf der Ebene der Lochblende 12 erzeugt, nachgewiesen werden können.

Das optische System 13 gewährleistet eine optimale Ausleuchtung des Detektors 6 durch den vom Detektionslaser 3 ausgehenden Lichtstrahl. Das weitere, als Filter eingesetzte Langpasskantenfilter 9b spiegelt den vom Anregungslaser 4 emittierten Lichtstrahl in die Strahlfalle (Beamstop) 7. Dadurch werden Rückreflektionen des vom Anregungslaser 4 ausgehenden Lichtstrahls in die Probe, die dort zu unerwünschten weiteren thermischen Effekten führen würden, verhindert; außerdem kann nur der vom Detektionslaser 3 emittierte Lichtstrahl am Detektor wahrgenommen werden. Die beiden Langpasskantenfilter 9a und 9b können dieselben physikalischen Eigenschaften aufweisen.

Die Wahrnehmung der Lichtintensitätsveränderungen erfolgt über die photoempfindlichen Detektoren 5 und 6, deren Signale mittels geeigneter Verstärker der Auswerteeinheit 19 über Verbindungsleitungen 16 zugeführt werden. Der photoempfindliche Detektor 5 mißt die Lichtintensität des Anregungslichts am Ort des Langpasskantenfilters 9a. Sollten hier Intensitätsschwankungen auftreten, so können die dadurch resultierenden Signalschwankungen am Detektor 6 durch die Auswerteeinheit 19 korrigiert werden. Der Detektor 6 mißt das eigentlicht Signal der Thermischen Linse (T. L.). Wird der Lichtstrahl aus der Anregungslichtquelle 4 durch den Modulator 17 zerhackt, so erhält man im Detektor 6 ein von der Modulationsfrequenz phasenabhängiges T. L.-Signal. In der Auswerteeinheit 19 kann die Auswertung dann phasenabhängig erfolgen (Lock-in-Technik).

Können die Anregungslichtquelle 4 und der Detektionslaser 3 aus räumlichen Gründen nicht in unmittelbarer Nähe zur Probe angeordnet werden, so können an den Stellen 18 Lichtleiter eingefügt werden.

Im folgenden wird die Justierung des erfindungsgemäßen Sensors mit Hilfe der Irisblende 10 beschrieben.

Justiert wird mit geschlossener Irisblende 10. Bei einer Dejustierung durch die Probe 11 bzw. durch deren Strahlversatz fallen die beiden Lichtstrahlen nicht exakt auf das Loch der Lochblende 12. Dies hat zur Folge, daß die Lichtintensität des Strahls aus dem Detektionslaser 3, der durch die Abschattung durch die Irisblende 10 nur einen kleinen Lichtpunkt bewirkt, am Detektor 6 relativ klein ist. Wird die Probe durch eine Verschiebeeinheit 15 senkrecht zu den beiden Strahlen gekippt, so kommt es durch eine Änderung des Strahlversatzes in der Probe 11 zu einer Änderung der Lichtintensität am Detektor 6. Ein identisches Verhalten verursacht der Lichtstrahl aus der Anregungslichtquelle 4, wobei hier die Intensitätsänderung am Detektor 7 registriert wird. Wird die Probe 11 so gekippt, daß die beiden Lichtstrahlen bei geschlossener Irisblende 10 ein Maximum an Intensität durch die Lochblende 12 transmittieren, ist der Sensor justiert. Mit einem Detektor 7 anstelle der Strahlfalle kann die Justierung auch automatisch vorgenommen werden. Ein Rechner wertet die Signale der beiden Detektoren 6 und 7 aus und verschiebt gegebenenfalls die Probe 11. Die Probe soll maximal um einen Winkel von α = 5°ausgelenkt werden, wobei α den Winkel zwischen der Flächennormalen der Probe in Richtung auf den Strahlteiler und den Lichtstrahlen darstellt.

In Fig. 2 sind die erfindungsgemäß erzeugten Strahlverhältnisse schematisch dargestellt. Von den Komponenten des erfindungsgemäßen photothermischen Sensors sind die Probe 11 (z. B. eine wäßrige Lösung in einer Küvette), die Lochblende 12 und der Detektor 6 dargestellt. Mit dem Bezugszeichen 21 ist der erste, von der Anregungslichtquelle emittierte Lichtstrahl bezeichnet. Dieser Strahl weist am Ort der Probe 11 eine Einschnürung auf. Die Lochblende ist in einem Abstand d von der Probe 11 angeordnet. Der freie Durchmesser der Lochblende ist so gewählt, daß der erste Lichtstrahl die Lochblende ungehindert passiert. Der zweite, vom Detektionslaser emittierte Lichtstrahl, der mit 20 bezeichnet ist, ist so aufgeweitet, daß sein Radius am Ort der Probe mindestens 5 mal so groß ist wie der Radius des ersten Lichtstrahls.

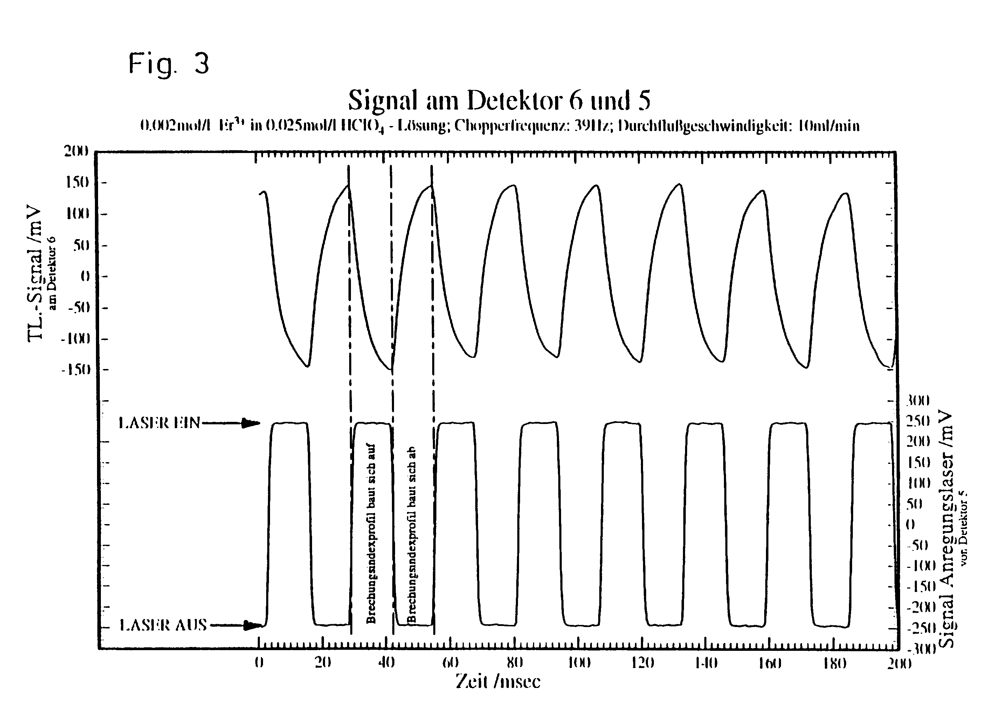

Fig. 3 zeigt ein Diagramm des während der photothermischen Messung detektierbaren T. L.-Signals. Auf der Abszisse ist die Zeit in Millisekunden und auf der Ordinate die Detektorsignale in mV aufgetragen. Im unteren Teil des Diagramms erscheint das Signal, das am Detektor 5 (siehe Fig. 1) erhalten wird. Im oberen Teil des Diagramms ist das Signal dargestellt, das am Detektor 6 (siehe Fig. 1) meßbar ist.

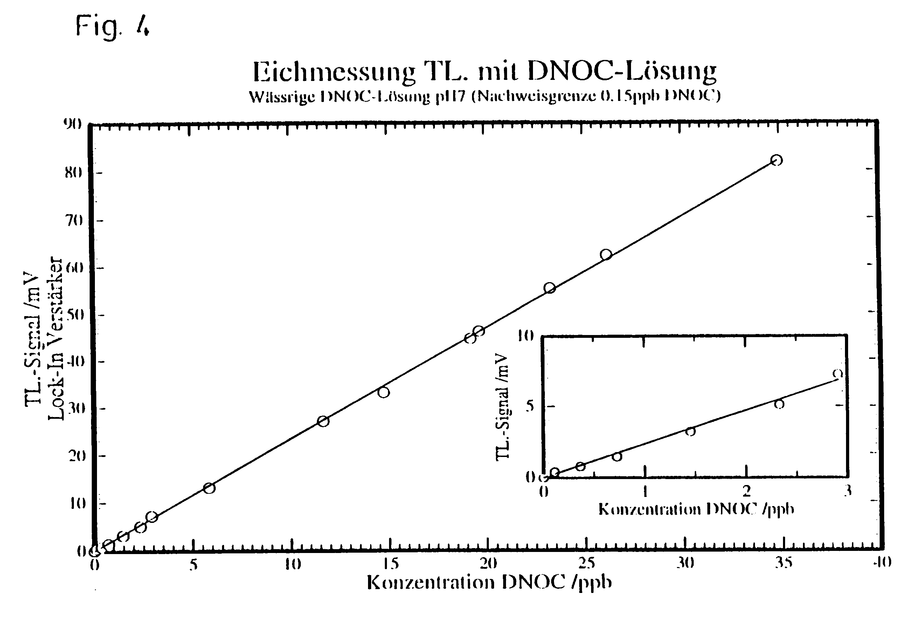

Fig. 4 zeigt eine Eichgerade, die mit dem in Fig. 1 dargestellten photothermischen Sensor gemessen wurde. Die Proben bestanden aus einer Lösung von Dinitroorthokresol (DNOC) in Wasser. Auf der Abszisse ist die Konzentration von DNOC in ppb und auf der Ordinate das T. L.-Signal des Detektors 6 (siehe Fig. 1) aufgetragen. Wie aus dieser Eichgerade hervorgeht, können mit dem erfindungsgemäßen Sensor organische Stoffe in einer Konzentration von wenigen ppb nachgewiesen werden.

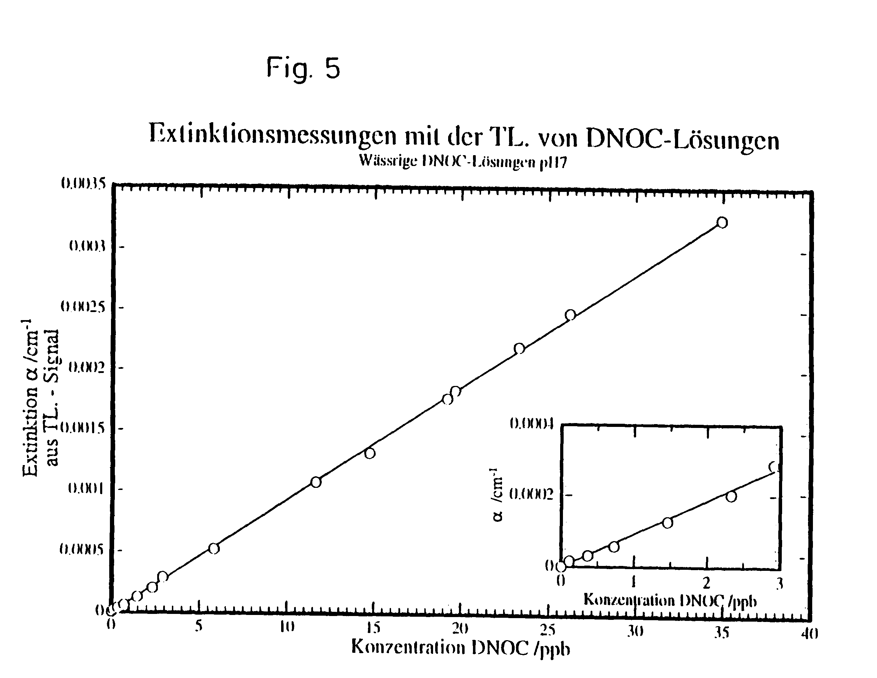

Fig. 5 zeigt das Ergebnis von Extinktionsmessungen an DNOC. Auf der Abszisse ist wiederum die Konzentration von DNOC in ppb und auf der Ordinate die Extinktion in der Einheit cm⁻¹ aufgetragen.

## Patentansprüche

1. Photothermischer Sensor zur Bestimmung der Konzentration einer Komponente in einer Probe (11) bestehend aus
a) einer Anregungslichtquelle (4), die einen ersten Lichtstrahl einer solchen Wellenlänge aussendet, daß in der Probe (11) eine Absorption stattfindet, sowie im Strahlengang des ersten Lichtstrahls
b) einem Modulator (17) und nachfolgend
c) einer solchen Abbildungsoptik (14), die in der Nähe der Probe (11) eine Einschnürung des ersten Lichtstrahls bewirkt,
d) einem Detektionslaser (3), der einen zweiten Lichtstrahl eines kohärenten Lichts rechtwinklig zum ersten Lichtstrahl aussendet sowie
e) einer Linse (8) im zweiten Lichtstrahl;
f) einem Strahlteiler (9a) mit zwei Seiten (1, 2), der so angeordnet ist, daß
- der von der Anregungslichtquelle (4) ausgesandte erste Lichtstrahl nach Durchgang durch den Modulator (17) und die Abbildungsoptik (14) und der zweite Lichtstrahl des vom Detektionslaser (3) ausgesandten kohärenten Lichts nach Durchgang durch die Linse (8) auf verschiedene Seiten des Strahlteilers (9a) fallen,
- sowohl ein Anteil des von der Anregungslichtquelle (4) ausgehenden ersten Lichtstrahls als auch ein Anteil des zweiten Lichtstrahls des vom Detektionslaser (3) ausgesandten kohärenten Lichts auf die Probe (11) fallen;
g) einem ersten photoempfindlichen Detektor (5), der so angeordnet ist, daß er einen weiteren Anteil des ersten Lichtstrahls im Strahlengang hinter dem Strahlteiler (9a) registriert; sowie ferner
im Strahlengang des auf die Probe (11) fallenden und die Probe (11) durchstrahlenden Lichts hinter der Probe (11) angeordnet sowohl
h) einer Blende (12) als auch
i) einem Filter (9b),
hinter denen sich im Strahlengang
j) ein zweiter photoempfindlicher Detektor (6) befindet,
dadurch gekennzeichnet, daß
k) die Linse (8) so gewählt ist, daß der zweite Lichtstrahl des vom Detektionslaser (3) ausgesandten kohärenten Lichts eine Aufweitung in der Weise erfährt, daß sein Radius am Ort der Probe (11) mindestens fünf mal so groß ist wie der Radius der Einschnürung des ersten Lichtstrahls am Ort der Probe (11) und daß
l) die Blende (12) unmittelbar nach der Probe (11) in der Weise angeordnet ist, daß der erste Lichtstrahl die Blende (12) ungehindert passiert.

2. Photothermischer Sensor nach Anspruch 1, dadurch gekennzeichnet, daß
die Abbildungsoptik (14) eine achromatische Optik darstellt.

3. Photothermischer Sensor nach Anspruch 1, dadurch gekennzeichnet, daß
der Strahlteiler (9a) ein Langpaßkantenfilter ist.

4. Photothermischer Sensor nach Anspruch 1, dadurch gekennzeichnet, daß
in den Strahlengang zwischen dem Strahlteiler (9a) und der Probe (11) eine Irisblende (10) angeordnet ist.

5. Photothermischer Sensor nach Anspruch 1, dadurch gekennzeichnet, daß
die Blende (12) eine Lochblende ist.

6. Photothermischer Sensor nach Anspruch 1, dadurch gekennzeichnet, daß
als Filter (9b) ein weiteres Langpaßkantenfilter eingesetzt wird und das vom weiteren Langpaßkantenfilter umgelenkte Licht in eine Strahlfalle geleitet wird.

7. Photothermischer Sensor nach Anspruch 6, dadurch gekennzeichnet, daß
als Strahlfalle ein dritter Detektor (7) eingesetzt wird.

8. Photothermischer Sensor nach Anspruch 1, dadurch gekennzeichnet, daß
die Probe (11) eine mit einer stehenden Lösung gefüllte Küvette darstellt und der Modulator (17) eine Frequenz von ca. 4 bis 6 Hz aufweist.

9. Photothermischer Sensor nach Anspruch 1, dadurch gekennzeichnet, daß
die Probe (11) eine mit einer bewegten Lösung gefüllte Durchflußküvette darstellt und der Modulator (17) eine Frequenz von 40 bis 60 Hz aufweist.

10. Photothermischer Sensor nach Anspruch 1, dadurch gekennzeichnet, daß
die Probe (11) ein Festkörper darstellt und der Modulator (17) eine Frequenz von ca. 3000 Hz aufweist.

11. Photothermischer Sensor nach Anspruch 1, dadurch gekennzeichnet, daß
die Linse (8) so gewählt wird, daß der zweite Lichtstrahl des vom Detektionslaser (3) ausgesandten kohärenten Lichts eine Aufweitung in der Weise erfährt, daß sein Radius am Ort der Probe (11) fünf bis fünfzig mal so groß ist wie der Radius der Einschnürung des ersten Lichtstrahls am Ort der Probe (11).

## Claims

1. Photo-thermal sensor for determining the concentration of a component in a sample (11), comprising
a) an excitation light source (4), which emits a first light beam of such a wavelength that an absorption occurs in the sample (11), and, in the path of the first light beam,
b) a modulator (17) and subsequently
c) such an optical imaging system (14), which causes the first light beam to narrow in the vicinity of the sample (11),
d) a detection laser (3), which emits a second light beam of a coherent light at right angles to the first light beam, as well as
e) a lens (8) in the second light beam;
f) a beam splitter (9a), which has two sides (1, 2) and is so disposed that,
- after passing through the modulator (17) and the optical imaging system (14), the first light beam emitted from the excitation light source (4) and, after passing through the lens (8), the second light beam of the coherent light emitted from the detection laser (3) fall on different sides of the beam splitter (9a),
- both a portion of the first light beam emitted from the excitation light source (4) and a portion of the second light beam of the coherent light emitted from the detection laser (3) fall on the sample (11);
g) a first photosensitive detector (5), which is so disposed that it records an additional portion of the first light beam in the path behind the beam splitter (9a); as well as both
h) a diaphragm (12) and
i) a filter (9b)
are also disposed behind the sample (11) in the path of the light falling on the sample (11) and shining through the sample (11),
behind which diaphragm and filter
j) a second photosensitive detector (6) is situated in the beam path,
characterised in that
k) the lens (8) is so selected that the second light beam of the coherent light emitted from the detection laser (3) undergoes a broadening in such a manner that its radius at the location of the sample (11) is at least five times greater than the radius of the narrowed first light beam at the location of the sample (11), and in that
l) the diaphragm (12) is disposed immediately after the sample (11) in such a manner that the first light beam passes the diaphragm (12) unhindered.

2. Photo-thermal sensor according to claim 1, characterised in that the imaging optical system (14) is an achromatic optical system.

3. Photo-thermal sensor according to claim 1, characterised in that the beam splitter (9a) is an elongate adjustment cut-off filter.

4. Photo-thermal sensor according to claim 1, characterised in that an iris diaphragm (10) is disposed in the path of light beam between the beam splitter (9a) and the sample (11).

5. Photo-thermal sensor according to claim 1, characterised in that the diaphragm (12) is an apertured diaphragm.

6. Photo-thermal sensor according to claim 1, characterised in that an additional elongate adjustment cut-off filter is used as filter (9b), and the light deflected from the additional elongate adjustment cut-off filter is conducted into a beam stop.

7. Photo-thermal sensor according to claim 6, characterised in that a third detector (7) is used as the beam trap.

8. Photo-thermal sensor according to claim 1, characterised in that the sample (11) represents a cell filled with a standing solution, and the modulator (17) has a frequency of approx. 4 to 6 Hz.

9. Photo-thermal sensor according to claim 1, characterised in that the sample (11) represents a flow cell filled with a moving solution, and the modulator (17) has a frequency of 40 to 60 Hz.

10. Photo-thermal sensor according to claim 1, characterised in that the sample (11) represents a solid body, and the modulator (17) has a frequency of approx. 3000 Hz.

11. Photo-thermal sensor according to claim 1, characterised in that the lens (8) is so selected that the second light beam of the coherent light emitted from the detection laser (3) undergoes a broadening in such a manner that its radius at the location of the sample (11) is five to fifty times greater than the radius of the narrowed first light beam at the location of the sample (11).

## Revendications

1. Détecteur photothermique servant à déterminer la concentration d'un composant dans un échantillon (11) consistant en :
a) une source de lumière d'excitation (4), qui émet un premier rayon de lumière d'une longueur d'onde telle qu'ait lieu dans l'échantillon (11) une absorption, ainsi que sur le trajet du premier rayon de lumière,
b) un modulateur (17) et à la suite
c) une optique de reproduction (14) qui provoque à proximité de l'échantillon (11) un rétrécissement du premier rayon de lumière,
d) un laser de détection (3), qui émet un second rayon de lumière d'une lumière cohérente à angle droit par rapport au premier rayon de lumière,
e) une lentille (8) dans le second rayon de lumière,
f) une lame séparatrice (9a) avec deux faces (1, 2) qui est disposée de telle façon que :
- le premier rayon de lumière émis par la source de la lumière d'excitation (4) tombe après être passé à travers le modulateur (17) et l'optique de reproduction (14) et que le second rayon de lumière de la lumière cohérente émise par le laser de détection (3) tombe après être passé à travers la lentille (8) sur des côtés différents de la lame séparatrice (9a),
- et qu'une fraction du premier rayon de lumière, qui sort de la source de la lumière d'excitation (4), ainsi qu'une fraction du second rayon de lumière de la lumière cohérente, qui est émise par le laser de détection (3) tombent sur l'échantillon (11),
g) un premier détecteur photosensible (5) qui est disposé d'une façon telle qu'il enregistre une autre fraction du premier rayon de lumière sur le trajet du rayon derrière la lame séparatrice (9a) et en outre se trouve disposé sur le trajet du rayon de la lumière qui tombe sur l'échantillon (11) et qui passe à travers l'échantillon (11),
h) un diaphragme (12) comme aussi
i) un filtre (9b) derrière lequel se trouve sur le trajet du rayon
j) un second détecteur photosensible (6),
caractérisé en ce que
h) on choisit la lentille (8) de telle façon que le second rayon de lumière de la lumière cohérente, qui est émise par le laser de détection (3) subit un élargissement d'une manière telle que son rayon à l'endroit de l'échantillon (11) est au moins cinq fois aussi grand que le rayon de rétrécissement du premier rayon de lumière à l'endroit de l'échantillon (11) et en ce que le diaphragme (12) est disposé immédiatement après l'échantillon (11) d'une manière telle que le premier rayon de lumière passe sans entrave à travers le diaphragme (12).

2. Détecteur photothermique selon la revendication 1,
caractérisé en ce que
l'optique de reproduction (14) est une optique achromatique.

3. Détecteur photothermique selon la revendication 1,
caractérisé en ce que
la lame séparatrice (9a) est un filtre à arêtes.

4. Détecteur photothermique selon la revendication 1,
caractérisé en ce que
on dispose sur le trajet du rayon entre la lame séparatrice (9a) et l'échantillon (11) un diaphragme à iris (10).

5. Détecteur photothermique selon la revendication 1,
caractérisé en ce que
le diaphragme (12) est un sténopé.

6. Détecteur photothermique selon la revendication 1,
caractérisé en ce que
l'on utilise comme filtre (9b) un autre filtre à arêtes et l'on dirige la lumière déviée par l'autre filtre à arêtes dans une trappe à rayons.

7. Détecteur photothermique selon la revendication 6,
caractérisé en ce que
l'on utilise comme trappe à rayon un troisième détecteur (7).

8. Détecteur photothermique selon la revendication 1,
caractérisé en ce que
l'échantillon (11) constitue une cuvette remplie d'une solution immobile et le modulateur (17) présente une fréquence d'environ 4 à 6 Hz.

9. Détecteur photothermique selon la revendication 1,
caractérisé en ce que
l'échantillon (11) constitue une cuvette d'écoulement, remplie d'une solution en mouvement et le modulateur (17) présente une fréquence de 40 à 60 Hz.

10. Détecteur photothermique selon la revendication 1,
caractérisé en ce que
l'échantillon (11) est constitué par un corps solide et le modulateur (17) présente une fréquence d'environ 3000 Hz.

11. Détecteur photothermique selon la revendication 1,
caractérisé en ce que
la lentille (8) est choisie de telle façon que le second rayon de lumière de la lumière cohérente émise par le laser de détection (3) subit un élargissement d'une manière telle que son rayon est à l'endroit de l'échantillon (11) cinq à cinquante fois aussi grand que le demi-diamètre du rétrécissement du premier rayon de lumière à l'endroit de l'échantillon (11).
